# EUROPEAN PATENT APPLICATION

(11) **EP 1 116 920 A2**
(43) Date of publication of application: **18.07.2001**
(21) Application number: 01100573.3
(22) Date of filing: 10.01.2001
(51) Int. Cl.: F24C 15/32

(54) **Gas-heated oven**

(30) Priority: 10.01.2000 NL 1014044
(71) Applicant: Levens Group B.V., 5126 BD Gilze (NL)
(72) Inventor: Buijs, Johan Adam, 5032 EH Tilburg (NL); Wiggers, Gerrit Jan, 6714 BK Ede (NL)
(74) Representative: Bartelds, Erik

(57) **Abstract**

The invention relates to an oven which is provided with a preparation space and means for heating the preparation space, which heating means comprise a ceramic burner and a heat exchanger connected thereto. The oven can be provided with means for supplying a combustible gas/air mixture to the burner, which supply means comprise a fan and a control unit for adjusting the gas/air ratio of the mixture, wherein the burner can then be controllable and the control unit can be adapted to maintain a constant gas/air ratio in the case of variations in the quantity of mixture supplied to the burner per unit of time.

The heat exchanger can be a gas/air exchanger, with for instance two identical tubular sections which extend in the preparation space and have a diameter decreasing in the flow direction.

The heat exchanger can also be a gas/water exchanger, for instance a steam generator, with an exchanger housing which is filled with water and in which a number of parallel, reverse U-shaped flue gas ducts of elongate section is accommodated. A steam separator can be connected to the exchanger housing.

## Description

The invention relates to an oven provided with a preparation space and means for heating the preparation space, which heating means comprise at least one gas burner and at least one heat exchanger which is connected thereto and through which flow flue gases from the burner. Such an oven is known, for instance from the European patent specification 0 526 768.

The known oven is provided with a housing with a hot-air heating device and a steam generator, and is thus suitable for preparing food by baking or roasting on the one hand and steaming thereof on the other. The hot-air heating device is herein formed by a gas burner, the flame of which stands in a spirally wound heat exchanger tube, and which is further provided with a fan for forcing the flue gases through this tube. The exchanger tube is herein arranged along the rear wall of the preparation space of the oven around a mechanical fan whereby an airflow is generated in the oven. The heat exchanger tube and the fan are separated from the rest of the preparation space by a separating wall.

In addition to the hot-air heating device the oven is also provided with a steam generator, to which however no further reference is made in this older document.

The known oven has a number of drawbacks. The efficiency of the hot-air heating device is relatively low, and the emission of harmful gases such as nitrogen oxide (NOx) and carbon monoxide (CO) and carbon dioxide (CO₂) is relatively high. The disposition thereof furthermore results in an uneven heating of the air in the preparation space. The hot-air heating device is in addition relatively complex and therefore expensive, while not being simple to maintain either.

The object of the invention is therefore to provide an improved oven of the above described type, wherein these drawbacks do not occur. According to a first aspect of the present invention this is achieved in such an oven in that the at least one gas burner is a ceramic burner. Such a ceramic burner has a relatively high efficiency and a very low emission of harmful gases, particularly NOx, CO and CO₂.

A structurally simple oven is obtained when the ceramic burner comprises at least one perforated, substantially flat burner of ceramic material.

The oven can further be provided with means for supplying a combustible gas/air mixture to the at least one burner, which supply means comprise at least one fan and at least one control unit for adjusting the gas/air ratio of the mixture. According to another aspect of the present invention, the at least one burner is herein controllable, and the control unit is adapted to maintain a substantially constant gas/air ratio in the case of variations in the quantity of mixture supplied to the burner per unit of time. In this manner a very readily controllable burner is obtained which has a high efficiency and low emission values over a wide control range.

An oven which is simple to manufacture and maintain is herein obtained when the at least one control unit and the at least one fan are integrated in a single module.

The at least one heat exchanger can be a gas/air exchanger, whereby a hot-air heating installation is formed. In order to achieve an optimally even heating of the air in the preparation space, the exchanger herein comprises at least two substantially identical sections which extend in the preparation space. By using two or more identical heat exchangers the air is heated in uniform manner everywhere in the preparation space. The exchanger can herein be tubular, and the exchanger tube can have a diameter decreasing in the flow direction. A degree of turbulence increasing in the flow direction is hereby generated in the conduit, thereby ensuring a good heat transfer from the tube to the surrounding area.

The exchanger tube can have an at least partly looped progression with an increasing number of loops in the flow direction. In this manner the surface area of the exchanger increases in the flow direction, whereby a constant heating of the air is still achieved even when the temperature of the flue gases decreases in the flow direction.

The at least one heat exchanger can also be a gas/water exchanger, which can form part of a steaming part of the oven. The gas/water exchanger can herein be a steam generator. According to another aspect of the present invention the oven is therein provided with an exchanger housing which is at least partly filled with water and in which a number of substantially parallel, reverse U-shaped flue gas ducts is accommodated. Due to the U-shaped progression of the flue gas ducts a relatively long heat-exchanging path is formed in a relatively small space.

Each flue gas duct advantageously has an elongate section, whereby a relatively large exchanger surface is formed. The width of each flue gas duct and the mutual distance between each pair of adjacent flue gas ducts can herein be substantially the same, thereby achieving a good heat transfer. The width of each flue gas duct and the mutual distance between each pair of adjacent flue gas ducts can herein amount to in the order of several millimetres, whereby a very large heat exchanging capacity is collected in a very small space.

In order to prevent the steam generator carrying droplets into the preparation space of the oven, the generator is preferably provided with a steam separator connected to the exchanger housing. A compact construction is herein obtained when the steam separator comprises a tubular body provided with at least one opening and extending in the exchanger housing close to the top side. This tubular body is advantageously provided with a number of openings arranged therein distributed over the periphery, through which steam can escape from the exchanger housing while the droplets are retained therein. The openings are then preferably arranged close to the top side of the tubular body.

Finally, the invention further relates to a gas/air heat exchanger and a gas/water heat exchanger for application in an oven such as described above.

The invention will now be elucidated on the basis of an embodiment, wherein reference is made to the annexed drawing, in which:

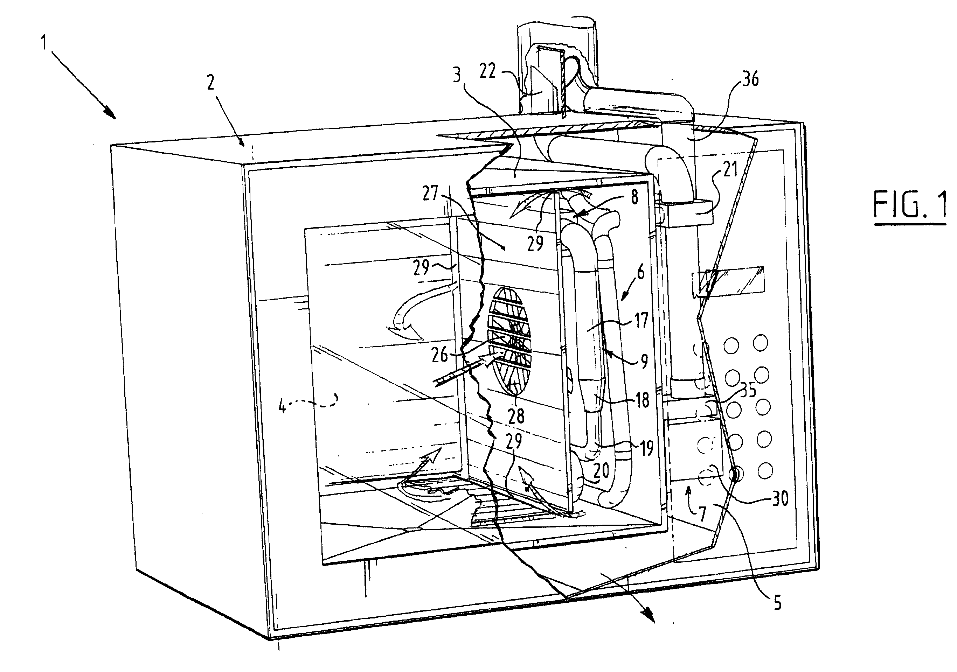

Figure 1 is a partly broken away perspective view of an oven according to the invention,

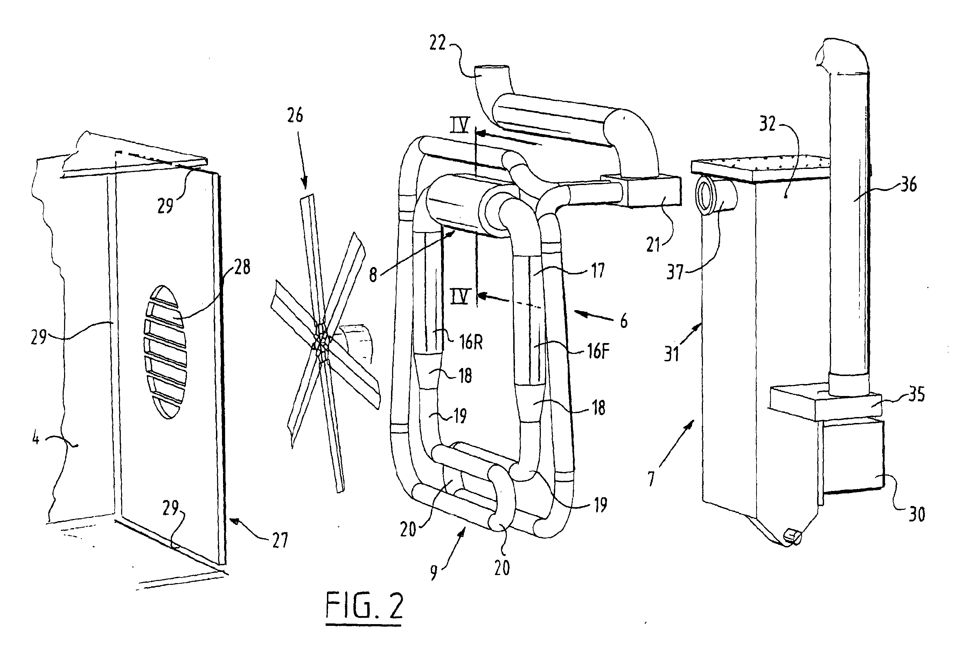

Figure 2 is a perspective view with exploded parts of the hot-air heating device of the oven of figure 1,

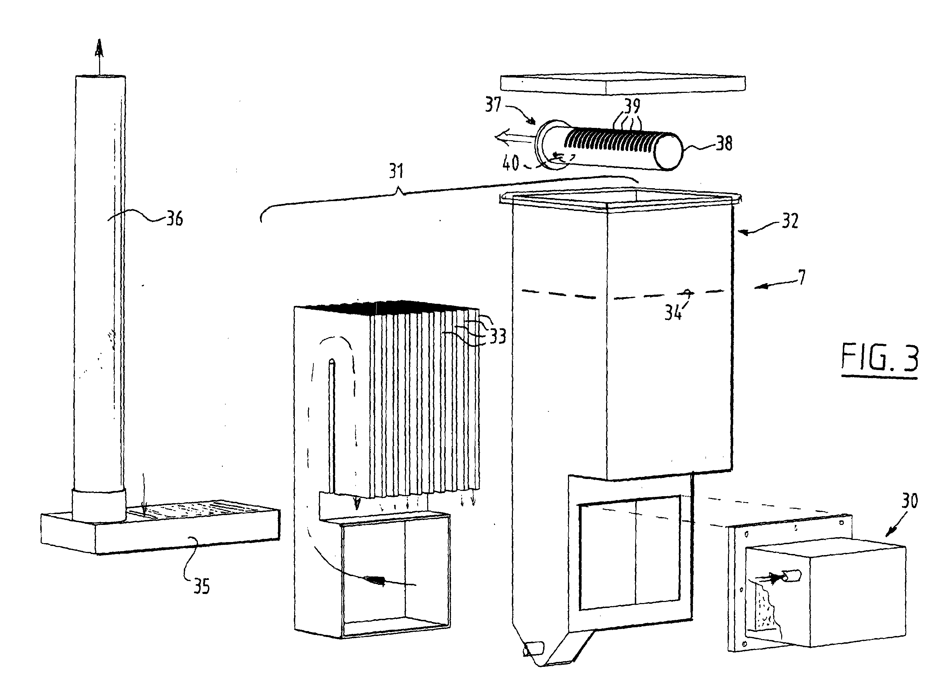

Figure 3 is a perspective view with exploded parts of the steam generator of the oven of figure 1, and

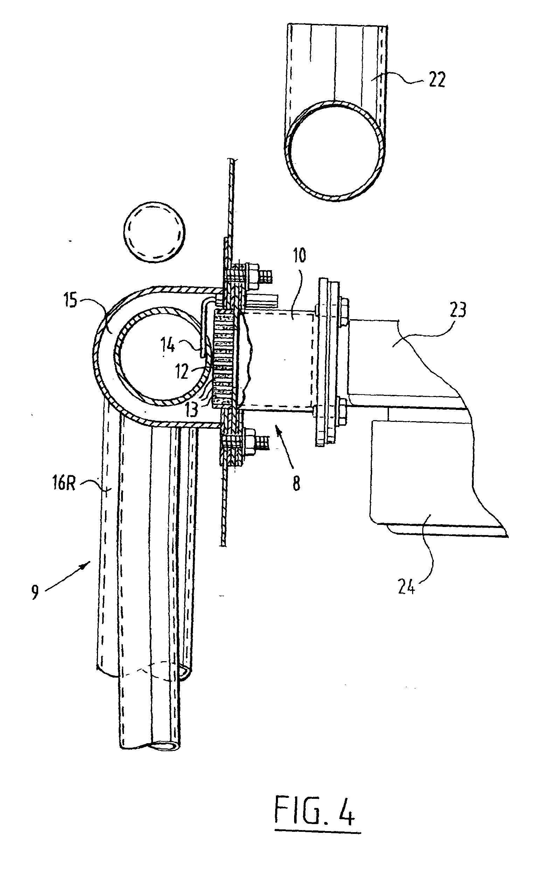

Figure 4 shows a cross-section along the line IV-IV in figure 2.

An oven 1 comprises a housing 2 which is separated by a wall 3 into a preparation space 4 and a machine room 5. In machine room 5 are arranged two heating systems, i.e. a hot-air heating device 6 and a steam generator 7.

Hot-air heating device 6 comprises a modulating burner 8 and, connected thereto, a gas/air heat exchanger 9 extending in the preparation space. Burner 8 is a ceramic burner formed by a chamber 10 which is connected to a feed conduit 11 for a gas/air mixture for combustion and which is closed on one side by a burner 12. In the shown embodiment this burner 12 is flat and substantially rectangular, and provided with a large number of openings 13 for the gas/air mixture for combustion. One or more igniting pins 14 are situated on the side of burner 12 remote from chamber 10, whereby the mixture flowing through burner 12 is ignited. This mixture herein combusts in a combustion chamber 15 into flames which extend from burner 12, and the flue gases formed herein flow out of combustion chamber 15 to a number of sections 16F, 16R of the tubular gas/air heat exchanger 9, these sections being substantially identical in the shown embodiment.

Each section 16F, 16R has a multi-curved or looped progression, and has in addition a diameter which varies in the through-flow direction. The part 17 of section 16F, 16R which connects directly onto combustion chamber 15 has a relatively large diameter, whereby the flue gases will flow through this part 17 at relatively low speed, and the flow will thus be substantially laminar. The heat transfer hereby takes place mainly from the outer layers of the laminar flow of the flue gases and the heat of the flue gases in the middle of the flow is for the greater part retained.

The exchanger tube then undergoes a narrowing 18, whereby the flow speed of the flue gases increases. Directly following the narrowed portion 18 the gases are guided through practically a right angle which, in combination with the high flow speed, results in the occurrence of turbulence, whereby the flue gases in exchanger tube 9 are mixed well and the heat from the middle is transported to the walls. A good heat transfer to the surrounding area is hereby also ensured in this part of heat exchanger 9.

Because the flue gases are already slightly cooled here due to the relinquishing of heat to the surrounding area, a choice has been made to enlarge the surface of this part of heat exchanger 9 by forming an extra loop 20. Via this extra loop 20 the flue gases are eventually guided to the front and rear of oven 1 and upward therefrom to an exhaust manifold 21, which is connected to a flue gas discharge 22.

The gas/air mixture for combusting in the ceramic burner 8 is formed in a mixing unit 23, and transported to burner 8 by means of a fan 24. This mixing unit 23 is provided with a control which ensures a constant ratio of the gas/air mixture, irrespective of the flow rate of the gas/air flow. Burner 8 can hereby be regulated over a wide range, wherein the gas/air mixture is always such that a stable combustion is achieved with a good efficiency and a low emission of NOx and CO or CO₂. The mixing and control unit 23 is herein integrated with fan 24 to form a single module 25, whereby the maintenance of oven 1 is considerably simplified. In the case of a malfunction of fan 24 or the mixing and control unit 23, module 25 can in that case be exchanged quickly and simply for a new or revised module.

The tubular heat exchanger 9 is arranged round a fan 26 in preparation space 4, whereby air is drawn out of preparation space 24 and forced along heat exchanger 9. Heat exchanger 9 is herein separated from the rest of preparation space 4 by a wall 27, and this separating wall 27 is provided with a central suction opening 28 at the position of fan 26. The dimensions of separating wall 27 are slightly smaller than those of oven 1, so that gaps 29 are formed along all sides of wall 27, whereby the air heated by heat exchanger 9 can be carried back again into preparation space 4.

Steam generator 7 is also provided with a ceramic burner 30, the construction of which corresponds with that of burner 8 of hot-air heating device 6. This burner 30 is also supplied with a gas/air mixture which is formed by a control (not shown here) with a constant mixing ratio, which again is integrated with a fan to form a single module which is simple to replace. The flue gases of ceramic burner 30 are guided in steam generator 7 through a gas/water heat exchanger 31, whereby the water is brought to the boil and steam is thus formed.

This gas/water heat exchanger 31 is formed by a housing 32 in which a large number of parallel flue gas ducts 33 is arranged. Flue gas ducts 33 have a reverse U-shaped progression, whereby the flue gases are guided first upward and then downward through heat exchanger 31. A relatively long exchanger path is thus obtained without exchanger 31 having to take a very large form. Each flue gas duct 33 has an elongate section with a width which is roughly equal to the distance to the adjacent flue gas duct 33. In this manner a lamellar construction is obtained, wherein fins 33 are situated wholly below the water surface 34. The width of fins 33 and the mutual distance therebetween is very small, and can be in the order of several millimetres. In the shown embodiment use is made of fins 33 with a thickness of about four millimetres. The flue gases which flow through fins 33 are collected in a discharge duct 35 which runs in transverse direction thereof and which in turn leads to a flue gas outlet 36.

As stated, steam will be created close to the top side of housing 32 due to the water coming to the boil, which steam can be injected into preparation space 4. A steam separator 37 is arranged so as to prevent water droplets here also entering preparation space 4. It is hereby possible to suffice with a relatively compact exchanger housing 32, which in turn results in a relatively compact construction of oven 1. In the shown embodiment the steam separator 37 is herein formed by a tubular body 38 which extends into exchanger housing 32 and which is provided on its upper side with a number of openings 39 through which steam can escape from exchanger housing 32. Since these openings 39 are arranged on the upper side, the chance of water droplets disappearing through them is relatively small. In addition, the tubular body is further provided with a barrier 40, whereby water possibly present therein is held back and separated, so that only pure steam is carried into preparation space 4.

In this manner the oven 1 as described above thus combines a compact and advantageous construction with a high efficiency and very low emission of harmful gases. In addition, the oven is simple to control and the most important components thereof are readily accessible for maintenance and repair purposes.

Although the invention is described above with reference to an embodiment, it will be apparent to the skilled person that it is not limited thereto. The oven could thus also be provided with only a hot-air heating device or only a steam generator of the type described above. The described configurations of the gas/air heat exchanger, the gas/water heat exchanger and the gas/air supply module could also be applied in combination with other forms of gas burner with a long, straight flame instead of the above burner. A plurality of similar heat exchangers could also be applied, and the number of sections of the gas/air heat exchanger could be increased or reduced. The scope of the invention is therefore defined solely by the appended claims.

## Claims

1. Oven, provided with a preparation space and means for heating the preparation space, which heating means comprise at least one gas burner and at least one heat exchanger which is connected thereto and through which flow flue gases from the burner, **characterized in that** the at least one heat exchanger is a gas/air exchanger which comprises at least two substantially identical sections which extend in the preparation space.

2. Oven as claimed in claim 1, **characterized in that** the exchanger is tubular.

3. Oven as claimed in claim 2, **characterized in that** the exchanger tube has a diameter decreasing in the flow direction.

4. Oven as claimed in claim 2 or 3, **characterized in that** the exchanger tube has an at least partly looped progression with an increasing number of loops in the flow direction.

5. Oven as claimed in any of the foregoing claims or according to the preamble of claim 1, **characterized in that** the at least one heat exchanger is a gas/water exchanger.

6. Oven as claimed in claim 5, **characterized in that** the gas/water exchanger is a steam generator.

7. Oven as claimed in claim 6, **characterized by** an exchanger housing which is at least partly filled with water and in which a number of substantially parallel, reverse U-shaped flue gas ducts is accommodated.

8. Oven as claimed in claim 7, **characterized in that** each flue gas duct has an elongate section.

9. Oven as claimed in claim 8, **characterized in that** the width of each flue gas duct and the mutual distance between each pair of adjacent flue gas ducts is substantially the same.

10. Oven as claimed in claim 9, **characterized in that** the width of each flue gas duct and the mutual distance between each pair of adjacent flue gas ducts amounts to in the order of several millimetres.

11. Oven as claimed in any of the claims 5-10, **characterized by** a steam separator connected to the exchanger housing.

12. Oven as claimed in claim 11, **characterized in that** the steam separator comprises a tubular body provided with at least one opening and extending in the exchanger housing close to the top side.

13. Oven as claimed in claim 12, **characterized in that** the tubular body is provided with a number of openings arranged therein distributed over the periphery.

14. Oven as claimed in claim 12, **characterized in that** the openings are arranged close to the top side of the tubular body.

15. Oven as claimed in any of the foregoing claims or according to the preamble of claim 1, further provided with means for supplying a combustible gas/air mixture to the at least one burner, which supply means comprise at least one fan and at least one control unit for adjusting the gas/air ratio of the mixture, **characterized in that** the at least one burner is controllable and the control unit is adapted to maintain a substantially constant gas/air ratio in the case of variations in the quantity of mixture supplied to the burner per unit of time.

16. Oven as claimed in claim 15, **characterized in that** the at least one control unit and the at least one fan are integrated in a single module.

17. Oven as claimed in any of the foregoing claims, **characterized in that** the at least one gas burner is a ceramic burner.

18. Oven as claimed in claim 17, **characterized in that** the ceramic burner comprises at least one perforated, substantially flat burner of ceramic material.

19. Gas/air heat exchanger, evidently intended for application in an oven as claimed in any of the claims 1-4.

20. Gas/water heat exchanger, evidently intended for application in an oven as claimed in any of the claims 5-14.
